# EUROPEAN PATENT APPLICATION

(11) **EP 4 790 881 A1**
(43) Date of publication of application: **12.08.2026**
(21) Application number: 25156926.5
(22) Date of filing: 10.02.2025
(51) Int. Cl.: H02M 1/32, H02M 7/483, H02M 7/49

(54) **MODULAR MULTILEVEL CONVERTER**

(71) Applicant: Hitachi Energy Ltd, 8050 Zürich (CH)
(72) Inventor: Choudhury, Abhijit, 72345 Västerås (SE); Chen, Nan, 72210 Västerås (SE); Johannesson, Daniel, 72231 Västerås (SE); Jayan, Vijesh, 72359 Västerås (SE)
(74) Representative: Michalski Hüttermann & Partner mbB

(57) **Abstract**

The invention relates to a Modular Multilevel Converter, MMC, comprising, for each of three phases, a plurality of Modular Multilevel Converter cells (1u, 2u, Nu, 1l, 2l, Nl) each comprising a plurality of sub cells (100, 133, 134) each comprising a positive DC bus (114, 126, 127, 128), a negative DC bus (115), a capacitor (104) connected between the positive DC bus (114, 126, 127, 128) and the negative DC bus (115), and at least one half or full bridge having at least one series connection of two switches (108, 109, 200, 201) with a midpoint (A, 123, 124, 125) and connected in parallel to the capacitor (104); a plurality of inductors (131, 130, 129) and a plurality of second switches (S2); whereby the negative DC busses (115) are connected together; the positive DC busses (114, 126, 127, 128) are each connected via one of the plurality of inductors (131, 130, 129) together (132); and the midpoints (A, 123, 124, 125) are each connected to one of the plurality of second switches (S2).

## Description

### Technical Field

The invention relates to a modular Multilevel Converter, MMC, comprising, for each of three phases, a plurality of modular Multilevel Converter cells each comprising a plurality of sub cells each comprising a positive DC bus, a negative DC bus, a capacitor connected between the DC bus and the negative DC bus, and at least one half or full bridge having at least one series connection of two switches with a midpoint and connected in parallel to the capacitor. The invention further relates to a method for operating a Modular Multilevel Converter, MMC, comprising the Modular Multilevel Converter.

### Background Art

A modular Multilevel Converter, MMC, is a highly efficient and scalable power electronic converter used in high-voltage direct current, HVDC, transmission, motor drives, and renewable energy integration. The MMC typically consists of multiple cascaded cells, typically half-bridge or full-bridge cells, connected in series to form phase arms, allowing the MMC to generate a multilevel output voltage that reduces harmonic distortion and switching losses. The MMCs modular design enables higher efficiency, improved fault tolerance, and scalability by adjusting the number of sub cells to achieve desired voltage and power levels. MMCs are widely used in modern power systems for their superior performance in high-power applications, offering better power quality and operational reliability compared to conventional converters.

One of the most stressful failure events for MMCs is shoot-through failure. Said failure event occurs when semiconductor devices of the MMC are in an ON status, turned ON or in ON status due to failure, at the same time and forms a short-circuit path with capacitors of the MMC cells. Alternatively, this event occurs when an upper position switch and a mechanical bypass switch is conducting at the same time. Capacitor discharge current through the components may, depending on configuration, reach in the order of 1 kA or above and provides a large electrical and mechanical stress to the MMC components, e.g., bypass switch, semiconductor package/frame, busbars and other components. Because of this, the components of conventional MMC need robust design and high design requirements to withstand shoot-through current failure events. This in turn increases manufacturing cost of individual components which in turn makes maintenance expensive whenever a component needs to be replaced.

More severe, for increasing a power rating of each cell, capacitor and bypass switch current ratings need to in-crease proportionately. To accommodate existing available devices - currently available mechanical by-pass switch can withstand 2-3 kA - for higher current applications such as future requirements for HVDC valve, multiple cells can be connected in parallel. One of the so far not resolved challenges of such approach is to keep a DC bus voltage for each cell balanced and limit a fault current to transfer from one cell to another one in case of any fault. Specifically, current issues include problems such as that one cell capacitor contains all energy, high discharge current per cell and limited current handling capacity of existing mechanical bypass switches.

### Summary of invention

It is therefore an object of the invention to provide a Modular Multilevel Converter, MMC, with reduced fault current flow.

The object of the invention is solved by the features of the independent claims. Preferred implementations are detailed in the dependent claims.

Thus, the object is solved by a Modular Multilevel Converter, MMC, comprising, for each of three phases, a plurality of Modular Multilevel Converter cells each comprising
a plurality of sub cells each comprising a positive DC bus, a negative DC bus, a capacitor connected between the DC bus and the negative DC bus, and at least one half or full bridge having at least one series connection of two switches with a midpoint and connected in parallel to the capacitor;
a plurality of inductors and
a plurality of second switches; whereby
the negative DC busses are connected together preferably forming a first output terminal;
the positive DC busses are each connected via one of the plurality of inductors together; and
the midpoints are each connected to one of the plurality of second switches together preferably forming a second output terminal.

In other words, a modular multilevel converter is proposed that includes a configuration for each phase with several modular multilevel converter cells. Each cell integrates multiple half or full bridge sub-cells, where every sub-cell is structured with a positive DC bus, a negative DC bus, and a capacitor positioned between them. A pair of switches is arranged in series forming the half or full bridge and placed in parallel to the capacitor, defining a midpoint. Additionally, the modular multilevel converter is equipped with multiple inductors and second switches. The proposed solution interconnects the negative DC buses to preferably establish a first output terminal, while the positive DC buses are each coupled through individual inductors to a common connection point. Furthermore, the midpoints of the sub-cells are linked together via respective second switches, thereby preferably forming a second output terminal.

The solution thus proposes connecting the plurality of sub cells in parallel. An inductive element respectively the plurality of inductors are connected in between the sub-cells in the positive DC busses bus to help voltage sharing and limiting surge current. Each sub-cell can be connected or disconnected from the common DC bus based on a fault status of the respective sub-call. A bypass switch can be connected at each sub-cell second output terminal, to connect or disconnect the respective sub-call from a main circuit. Such wise a fault current can be shared in between a lower cell and the bypass switch to reduce a current rating of the bypass. The proposed solution thus advantageously allows sharing a common DC bus voltage while reducing fault current flow into a single switch for bypassing. Thus, multiple sub cell can be easily integrated to an individual cell to increase an overall current density of the MMC and the fault current can be shared in between the bypass switches and the sub cell.

In even other words, the proposed solution uses multiple sub cells in parallel, allows turning on half or full bridges to discharge capacitor energy, places the inductor in-between the parallel sub cells and places the second switch to disconnect parallel cells from other sub cells. Thereby, the inductor will balance a capacitor voltage in passive way so that energy from capacitors of different sub cells will not come to each other at transient fault. Thus, energy can be split in between parallel sub cells, energy dissipated at the option optional bypass switch can be reduced or completely eliminated, each capacitor will share the same voltage and/or individual faulty sub cells can be disconnected from other sub cells.

Preferably, the half or full bridges refer to a power electronic circuit used in the MMCs to regulate voltage and current flow. These cells consist of semiconductor switches and possibly energy storage elements. Thereby, a half-bridge usually comprises two semiconductor switches connected in series between the positive DC bus and the negative DC bus, with their midpoint serving as an output terminal. The capacitor is connected in parallel to the switch pair, providing energy storage and voltage balancing.

A full-bridge usually extends the half-bridge configuration by including an additional pair of semiconductor switches. This allows for bidirectional voltage control at the output, meaning the output terminal can be switched between positive and negative DC voltages, enabling more flexible voltage synthesis. The full-bridge enhances fault tolerance and is useful for applications requiring higher control over AC waveform generation. Both types form a modular structure that enables precise voltage control, fault management, and efficient AC-to-DC or DC-to-AC conversion. The second switch can be provided as mechanical or electronic switch.

The term connected via one of the plurality of inductors together preferably means that the respective inductor is connected in-between the respective positive DC bus and a common connection point. Similar, the term connected via one of the plurality of second switches together preferably means that the respective second switch is connected in-between the respective midpoint and the second output terminal.

According to a preferred implementation the plurality of inductors are each provided as connection line, in particular as connection line between the respective positive DC bus and the common connection point. Thus, an inductance of the respective connection line makes up the respective inductor. In other words, it is preferred that the inductor is omitted by instead using the inductance of the connection line. Such implementation allows for a simplified structure while ensuring the inductance of the connection line serves as an integral part of the converter's connectivity. The configuration enhances ease of assembly and reduces the need for additional wiring elements. Furthermore, using connection lines ensures uniform inductance properties across all cells.

In another preferred implementation the Modular Multilevel Converter comprises a plurality of first switches each connected in series with one of the plurality of inductors. Such implementation enables controlled current flow through the inductors, allowing for selective switching and protection of the converter cells. The implementation enhances operational flexibility and enables dynamic adaptation to changing grid conditions. Additionally, the implementation can contribute to improved fault tolerance in the converter system. The first switch, as well as the second switch, can be provided as mechanical or electronic switch.

According to a further preferred implementation the plurality of first switches are provided in a first switch housing. In another preferred implementation the plurality of second switches are provided in a second switch housing. Said first switches and/or second switches advantageously help to connect or disconnect the faulty sub cell from the cell cell. Said implementations facilitate compact integration of the first switches and/or second switches, allowing for easier maintenance and improved thermal management, as thermal dissipation can be managed more effectively, preventing overheating issues. The first switch housing and/or the second switch housing can provide protection against external influences, increasing durability and reliability of the converter. Furthermore, the first switch housing and/or the second switch housing enables modular design, where the first switches and/or second switches can be conveniently replaced or upgraded.

According to a further preferred implementation the modular Multilevel Converter comprises a plurality of bypass switches, whereby each midpoint is connected via one of the plurality of bypass switches to the negative DC busses. The bypass switches enable an effective fault-handling mechanism by allowing faulty sub-cells to be bypassed, ensuring continued operation of the converter. Such implementation improves overall converter reliability and minimizes the impact of localized failures. Additionally, such bypass switch function can help manage transient conditions and protect other converter components.

In another preferred implementation the modular Multilevel Converter comprises a bypass switch, whereby the plurality of second switches form the second output terminal which is connected via the bypass switch to the negative DC busses and/or to the first output terminal in particular connected to the negative DC busses. Preferably, each cell of the MMC comprises a single bypass switch, whereby the second output terminal of the respective cell is connected via the bypass switch to the negative DC busses of the respective cell. Such configuration provides a mechanism for direct fault handling at an output stage, allowing for fast isolation of faulty conditions. The proposed implementation enables controlled current redirection to prevent excessive stress on individual sub-cells. Furthermore, such structure enhances operational safety and protects downstream equipment.

According to a further preferred implementation each of the plurality of modular Multilevel Converter cells connected in series comprises an AC midpoint configured for connecting to an AC grid. Such implementation allows for a direct grid integration, facilitating efficient power conversion from DC to AC. The AC midpoint enhances voltage balancing across the converter and improves grid synchronization. Additionally, such feature supports stable operation under fluctuating grid conditions.

In another preferred implementation the plurality of sub cells each comprise a plurality of half bridges connected in parallel with the midpoints connected together to one of the plurality of second switches. In a further preferred implementation, the the plurality of sub cells each comprises a plurality of additional inductors each arranged between one of the midpoints and the one of the plurality of second switches. In another preferred implementation the plurality of sub cells each comprise a respective full bridge having an additional midpoint, whereby the plurality of additional midpoint are connected together forming the first output terminal.

The object is further solved by a method for operating a Modular Multilevel Converter, MMC, comprising the Modular Multilevel Converter as described before with the plurality of bypass switches or the bypass switch, and the steps:
measuring a current and/or a desaturation voltage at each of the plurality of sub cells;
if the measured current and/or desaturation voltage of at least one faulty of the plurality of sub cells exceeds a measuring threshold, turning on the at least two switches of the at least one faulty of the plurality of sub cells;
calculating a number of faulty sub cells of the plurality of sub cells; and
if the number exceeds a fault threshold, turning on the respective bypass switch of the faulty sub cell.

This method enables fault detection and mitigation within the converter, ensuring stable operation even under degraded conditions. By identifying and bypassing faulty sub-cells, overall converter efficiency and reliability are preserved. Additionally, the proposed automatic fault-handling mechanism minimizes downtime and maintenance efforts. The measuring threshold is preferably ≥ 10, 20, 50, 75 or 100 A. The fault threshold is preferably ≥ 1, 2, 5 or 10 V, whereby the fault threshold can generally be any value, depending on a circuit power rating.

The object is further solved by a method for operating a Modular Multilevel Converter, MMC, comprising the Modular Multilevel Converter as described before with the plurality of bypass switches or the bypass switch, and the steps:
measuring a current and/or a desaturation voltage at each of the plurality of sub cells;
if the measured current and/or desaturation voltage of at least one faulty of the plurality of sub cells exceeds a measuring threshold, turning on the at least two switches of the at least one faulty of the plurality of sub cells and turning on the respective bypass switch associated to the at least one faulty of the plurality of sub cells;
conducting a delay; and
turning on the second switch associated to the at least one faulty of the plurality of sub cells.

The proposed method allows for controlled fault isolation by sequentially bypassing faulty sub-cells and activating secondary protective measures. The delay step ensures safe switching transitions, reducing the risk of voltage spikes. Additionally, the method enhances converter resilience by preventing fault propagation. The measuring threshold is preferably ≥ 10, 20, 50, 75 or 100 A. The delay is preferably ≥ 0,5, 1, 2 or 5 µsec or even higher.

According to a further preferred implementation the method comprises the plurality of first switches each connected in series with one of the plurality of inductors, and the step:
turning on the first switch associated to the at least one faulty of the plurality of sub cells.

This additional step provides a secondary level of redundancy, ensuring further protection in case of severe faults. The activation of the first switch facilitates controlled isolation and reconnection of the affected sub-cell. Furthermore, the inclusion of first switches in the fault-handling process improves overall system robustness.

It is preferred that the sequence of the method steps, insofar as not technically required in an explicit sequence, can be varied. However, the aforementioned sequence of method steps is particularly preferred.

### Brief description of drawings

These and other aspects of the invention will be apparent from and elucidated with reference to the implementations described hereinafter.

In the drawings:
Fig. 1 shows a circuit diagram of a Modular Multilevel Converter according to a preferred implementation,
Fig. 2 shows a circuit diagram of the Modular Multilevel Converter according to a further preferred implementation,
Fig. 3 shows a circuit diagram of the Modular Multilevel Converter according to an even further preferred implementation,
Fig. 4 shows a diagram illustrating a method for operating the modular Multilevel Converter of Fig. 1,
Fig. 5 shows a diagram illustrating a further method for operating the modular Multilevel Converter of Fig. 2,
Fig. 6 shows a circuit diagram of the Modular Multilevel Converter according to an even further preferred implementation, and
Fig. 7 shows a circuit diagram of the Modular Multilevel Converter according to an even further preferred implementation.

### Description of implementations

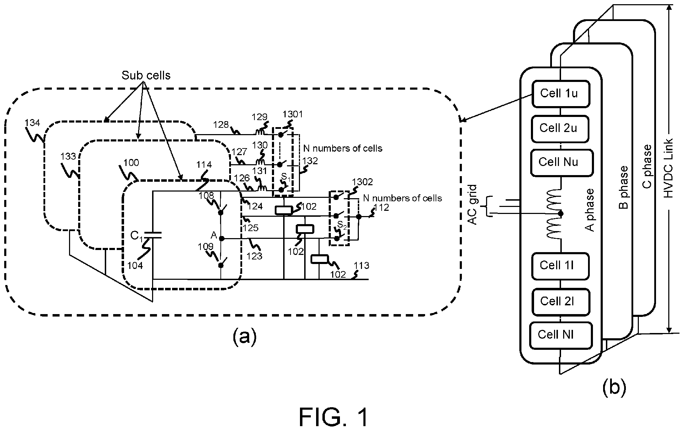

Fig. 1 shows a circuit diagram of a Modular Multilevel Converter, MMC, according to a preferred implementation. As can be seen on the right side of Fig. 1, depicted as Fig. 1 (b), the MMC is connected in-between an AC grid and a HVDC link and comprises, for each of three phases, a plurality of identical modular Multilevel Converter cells, referred to as Cell 1u, Cell 2u, ..., Cell Nu, Cell 1l, Cell 21, ..., Cell NI connected in series. Such wise each phase A, B, C comprises an AC midpoint connecting the AC grid arranged in the middle between Cell 1 u, Cell 2u, ..., Cell Nu and Cell 1l, Cell 2l, ..., Cell Nl.

The left side of Fig. 1 shows, depicted as Fig. 1 (a), one of the Modular Multilevel Converter cells 1u, 2u, Nu, 1l, 2l, NI in detail. Each cell 1u, 2u, Nu, 1l, 2l, Nl includes a plurality of half or full bridge sub-cells 100, 133, 134, where each half or full bridge cell comprises a positive DC bus 114, 126, 127, 128, a negative DC bus 115, and a capacitor 104 connected between the DC bus 114, 126, 127, 128 and the negative DC bus 115. Thus, each sub-cell 100, 133, 134 comprises its own capacitor 104. Additionally, each sub-cell includes a series connection of two switches 108, 109, 200, 201 having a midpoint A, 123, 125, 124 and connected in parallel to the capacitor 104. Further provided are a plurality of inductors 131, 130, 129 and a plurality of second switches S2.

Thereby, the negative DC busses 115 are connected all together forming a first output terminal 113 of the respective Modular Multilevel Converter cell 1u, 2u, Nu, 1l, 2l, Nl. The positive DC busses 114, 126, 127, 128 are each connected via one of the plurality of inductors 131, 130, 129 all together at a common connection 132. Also, the midpoints A, 123, 124, 125 are each connected via one of the plurality of second switches S2 together form ing a second output terminal 112 of the respective modular Multilevel Converter cell 1u, 2u, Nu, 1l, 2l, Nl. In another not depicted implementation the plurality of inductors 131, 130, 129 are each provided as connection line i.e. the inductance of the respective connection line constitutes the respective inductor 131, 130, 129.

The modular Multilevel Converter cell 1u, 2u, Nu, 1l, 2l, NI further comprises a plurality of first switches S1 each connected in series with one of the plurality of inductors 131, 130, 129, whereby the first switches S1 are connected together at the common connection 132. The plurality of first switches S1 are arranged in a first switch housing 1301. Likewise, the plurality of second switches S2 are arranged in a second switch housing 1302.

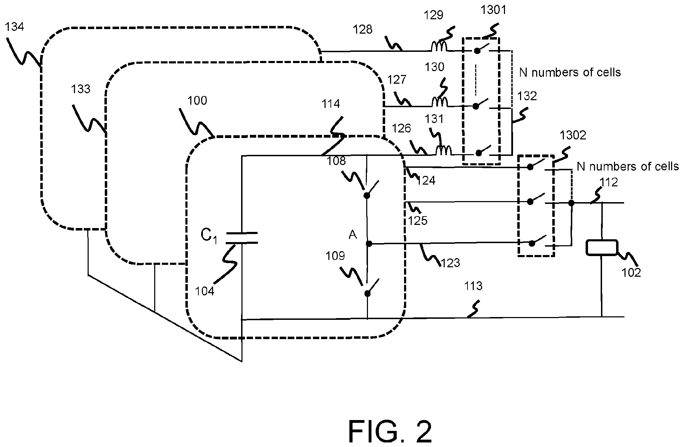

The modular Multilevel Converter cell 1u, 2u, Nu, 1l, 2l, NI further comprises a plurality of bypass switches 102, where each midpoint A, 123, 125, 124 is connected via one of the plurality of bypass switches 102 to the negative DC busses 115. In this respect Fig. 2 shows a further implementation, where Modular Multilevel Converter cell does not comprise the plurality of bypass switches 102 with each midpoint A, 123, 124, 125 connected via one of the plurality of bypass switches 102 to the negative DC busses 115 as depicted in Fig. 1 (a). Rather, the modular Multilevel Converter cell 1u, 2u, Nu, 1l, 2l, Nl comprises a single bypass switch 102, which is connected between the output terminal 112 and the negative DC busses 115 respectively the first output terminal 113.

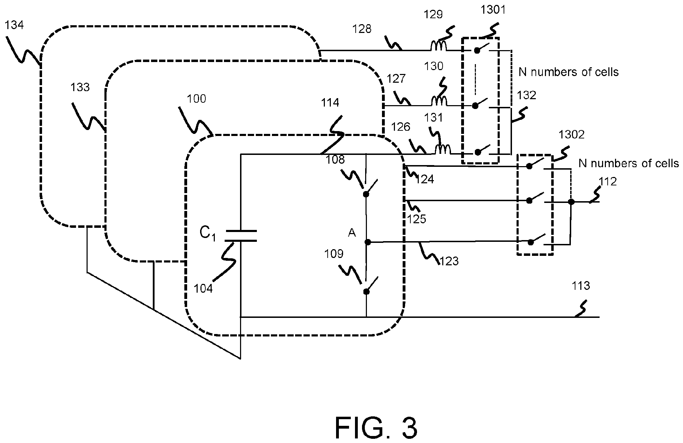

Fig. 3 shows an even further implementation, where the modular Multilevel Converter cell 1u, 2u, Nu, 1l, 2l, NI does not comprise any bypass switch 102.

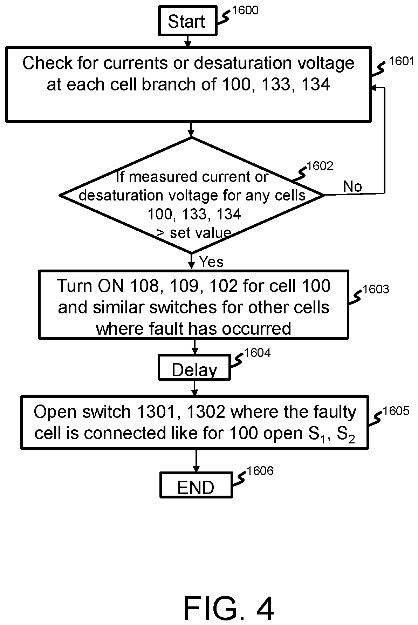

Fig. 4 shows a diagram illustrating a method for operating the modular Multilevel Converter of Fig. 1. After start in step 1600, in step 1602 a current and/or a desaturation voltage at each of the plurality of half or full bridge sub cells 100, 133, 134 is measured. If the measured current and/or desaturation voltage of at least one faulty of the plurality of half or full bridge sub cells 100, 133, 134 exceeds a measuring threshold, step 1602, the two switches 108, 109, 200, 201 of the at least one faulty of the plurality of half or full bridge sub cells 100, 133, 134 and the respective bypass switch 102 associated to the at least one faulty of the plurality of half or full bridge sub cells 100, 133, 134 are turned on in step 1603. Otherwise, step 1602 is repeated. Following step 1603, a delay is conducted in step 1604. Thereafter, the second switch S2 and preferably also the first switch S1 associated to the at least one faulty of the plurality of half or full bridge sub cells 100, 133, 134 is turned on in step 1605 and the method ends in step 1606.

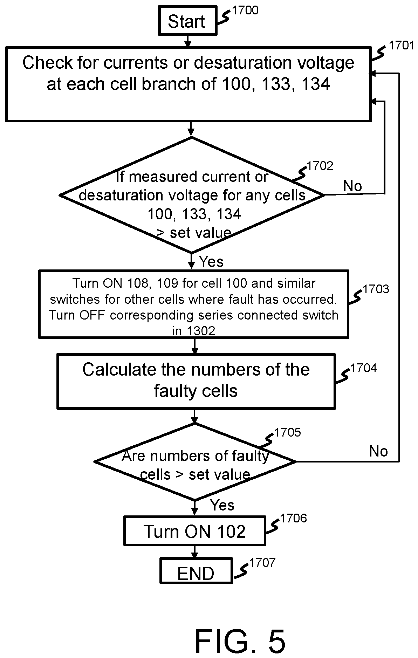

Fig. 5 shows a diagram illustrating a further method for operating the modular Multilevel Converter of Fig. 2. After start in step 1700, in an initial step 1701 a current and/or a desaturation voltage at each of the plurality of half or full bridge sub cells 100, 133, 134 is measured. Then, in step 1702, it is checked if the measured current and/or desaturation voltage of at least one faulty of the plurality of half or full bridge sub cells 100, 133, 134 exceeds a measuring threshold. If not, previous 1701 is repeated. If the measuring threshold is exceeded, in a next step 1703 the two switches 108, 109, 200, 201 of the at least one faulty of the plurality of half or full bridge sub cells 100, 133, 134 are turned on and the corresponding series switch 108, 109, 200, 201 connected at connection point of the second switch housing 1302 is turned off. Thereafter, in following step 1704, a number of faulty sub cells of the plurality of half or full bridge sub cells 100, 133, 134 is calculated. Then, in step 1705 it is checked if the number exceeds a fault threshold. If not, step 1701 is repeated. If yes, in step 1706 the bypass switch 102 is turned ON to bypass all parallel connected sub cells of the corresponding sub cell 100, 133, 134 and the method ends in step 1707.

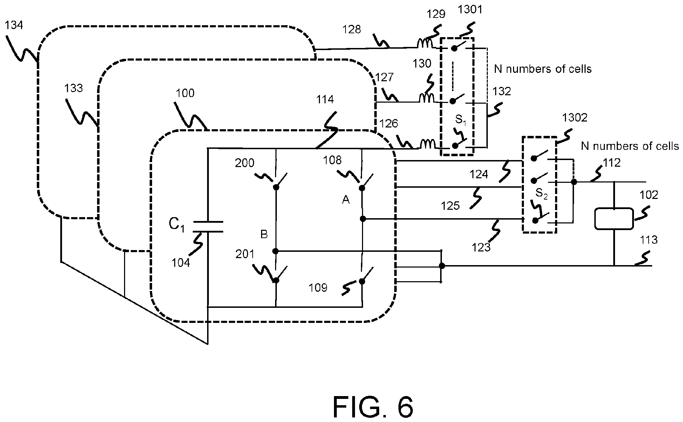

Fig. 6 shows an even further implementation comparable to the implementation shown in Fig. 2. However, instead of half bridges each sub-cell 100, 133, 134 comprises a full bridge with two additional switches 200, 201, connected in series between the positive DC bus 114, 126, 127, 128 and the negative DC bus 115, and having an additional midpoint B. Contrary to the implementations shown in Figs. 1 and 3, the negative DC bus 115 respectively the negative DC busses 115 are not connected to the first output terminal 113. Instead, all additional midpoints B are connected together forming the first output terminal 113, which is also connected via the bypass switch 102 to the second output terminal 112.

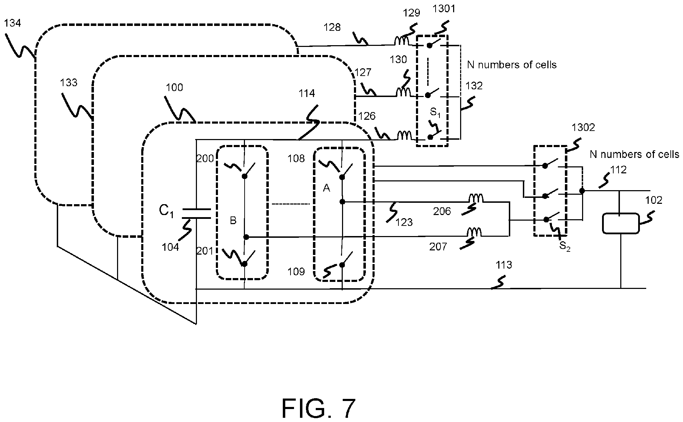

Fig. 7 shows an even further implementation comparable to the implementation shown in Figs. 2 and 6 i.e. having the bypass switch 102 connected between the first output terminal 113 and the second output terminal 112. As for Figs. 1 to 4, all negative DC busses 115 are connected to the first output terminal 113. However, each sub cell 100, 133, 134 comprises two half bridges connected in parallel, i.e. a first half bridge with switches 108, 109 and a second half bridge with two additional switches 200, 201 connected in series, between the positive DC bus 114, 126, 127, 128 and the negative DC bus 115, and having additional midpoint B. Both midpoint A, 123, 125, 124 and the additional midpoint B are connected via a respective additional inductor 206, 207 together to the second switch S2. While said configuration is only shown in Fig. 7 for the first sub-cell 100, second and third sub-cells 133, 134 comprise an identical configuration.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1u, 2u, Nu, 1l, 2l, Nl: Modular Multilevel Converter cell
- 100: sub-cell
- 102: bypass switch
- 104: capacitor
- 108: first switch of sub-cell
- 109: second switch of sub-cell
- 112: second output terminal
- 113: first output terminal
- 114: positive DC bus
- 115: negative DC bus
- 126: positive DC bus
- 127: positive DC bus
- 128: positive DC bus
- 129: inductor
- 130: inductor
- 131: inductor
- 132: common connection
- 133: half or full bridge sub-cell
- 134: half or full bridge sub-cell
- 123: midpoint
- 124: midpoint
- 125: midpoint
- 200: third switch of sub-cell
- 201: third switch of sub-cell
- 206: additional inductor
- 207: additional inductor
- 1301: first switch housing
- 1302: second switch housing
- S1: first switch
- S2: second switch
- A: midpoint
- B: additional midpoint

## Claims

1. Modular Multilevel Converter, MMC, comprising, for each of three phases, a plurality of Modular Multilevel Converter cells (1u, 2u, Nu, 1l, 2l, NI) each comprising
a plurality of sub cells (100, 133, 134) each comprising a positive DC bus (114, 126, 127, 128), a negative DC bus (115), a capacitor (104) connected between the positive DC bus (114, 126, 127, 128) and the negative DC bus (115), and at least one half bridge or full bridge having a series connection of two switches (108, 109, 200, 201) with a midpoint (A, B, 123, 124, 125) and connected in parallel to the capacitor (104);
a plurality of inductors (131, 130, 129) and
a plurality of second switches (S2); whereby
the negative DC busses (115) are connected together;
the positive DC busses (114, 126, 127, 128) are each connected via one of the plurality of inductors (131, 130, 129) together (132); and
the midpoints (A, B, 123, 124, 125) are each connected to one of the plurality of second switches (S2).

2. Modular Multilevel Converter according to the previous claim, whereby the plurality of inductors (131, 130, 129) are each provided as connection line.

3. Modular Multilevel Converter according to any of the previous claims, comprising a plurality of first switches (S1) each connected in series with one of the plurality of inductors (131, 130, 129).

4. Modular Multilevel Converter according to the previous claim, whereby the plurality of first switches (S1) are provided in a first switch housing (1301).

5. Modular Multilevel Converter according to any of the previous claims, whereby the plurality of second switches (S2) are provided in a second switch housing (1302).

6. Modular Multilevel Converter according to any of the previous claims, comprising a plurality of bypass switches (102), whereby each midpoint (A, B, 123, 124, 125) is connected via one of the plurality of bypass switches (102) to the negative DC busses (115).

7. Modular Multilevel Converter according to any of the previous claims 1 to 5, comprising a bypass switch (102), whereby the plurality of second switches (S2) form a second output terminal (112) which is connected via the bypass switch (102) to the negative DC busses (115) and/or to a first output terminal (113) in particular connected to the negative DC busses (115).

8. Modular Multilevel Converter according to any of the previous claims, whereby each of the plurality of Modular Multilevel Converter cells (1u, 2u, Nu, 1l, 2l, NI) connected in series comprises an AC midpoint configured for connecting to an AC grid.

9. Modular Multilevel Converter according to any of the previous claims, whereby the plurality of sub cells (100, 133, 134) each comprise a plurality of half bridges connected in parallel with the midpoints (A, B, 123, 124, 125) connected together to one of the plurality of second switches (S2).

10. Modular Multilevel Converter according to previous claim, the plurality of sub cells (100, 133, 134) each comprises a plurality of additional inductors (206, 207) each arranged between one of the midpoints (A, B, 123, 124, 125) and the one of the plurality of second switches (S2).

11. Modular Multilevel Converter according to any of the previous first eight claims, whereby the plurality of sub cells (100, 133, 134) each comprise a respective full bridge having an additional midpoint (B), whereby the plurality of additional midpoint (B) are connected together forming a first output terminal (113).

12. Method for operating a Modular Multilevel Converter, MMC, comprising the Modular Multilevel Converter according to the previous claims 6 or 7 and the steps:
measuring a current and/or a desaturation voltage at each of the plurality of sub cells (100, 133, 134);
if the measured current and/or desaturation voltage of at least one faulty of the plurality of sub cells (100, 133, 134) exceeds a measuring threshold, turning on the at least two switches (108, 109, 200, 201) of the at least one faulty of the plurality of sub cells (100, 133, 134);
calculating a number of faulty sub cells of the plurality of sub cells (100, 133, 134); and
if the number exceeds a fault threshold, turning on the respective bypass switch (102) of the faulty sub cell (100, 133, 134).

13. Method for operating a Modular Multilevel Converter, MMC, comprising the Modular Multilevel Converter according to the previous claims 6 or 7, and the steps:
measuring a current and/or a desaturation voltage at each of the plurality of sub cells (100, 133, 134);
if the measured current and/or desaturation voltage of at least one faulty of the plurality of sub cells (100, 133, 134) exceeds a measuring threshold, turning on the at least two switches (108, 109, 200, 201) of the at least one faulty of the plurality of sub cells (100, 133, 134) and turning on the respective bypass switch (102) associated to the at least one faulty of the plurality of sub cells (100, 133, 134);
conducting a delay; and
turning on the second switch (S2) associated to the at least one faulty of the plurality of sub cells (100, 133, 134).

14. Method according to the previous claim and comprising the Modular Multilevel Converter according to claim 3, and the step:
turning on the first switch (S1) associated to the at least one faulty of the plurality of sub cells (100, 133, 134).
